# FASCICULE DE BREVET EUROPEEN

(11) **EP 1 248 916 B1**
(45) Date de publication et mention de la délivrance du brevet: **11.08.2004**
(21) Numéro de dépôt: 00993635.2
(22) Date de dépôt: 22.12.2000
(51) Int. Cl.: F16F 1/12, B60T 11/28, B60T 15/04

(54) **MOYENS DE RAPPEL ELASTIQUE AVEC BASE D'ENCASTREMENT ET CORPS ALLONGE COMPORTANT DE TELS MOYENS**
ELASTISCHES RÜCKSTELLMITTEL MIT FLÄCHENBÜNDIGER LAGE UND LÄNGLICHENKÖRPERMIT EINEM SOLCHEN
ELASTIC RETURN MEANS WITH FLUSH FITTING BASE AND ELONGATED BODY COMPRISING SAME

(30) Priorité: 28.12.1999 FR 9916612
(43) Date de publication de la demande: 16.10.2002
(73) Titulaire: ROBERT BOSCH GmbH, 70469 Stuttgart (DE)
(72) Inventeur: DEVAMBE, David, F-94350 Villiers sur Marne (FR)
(74) Mandataire: Hurwic, Aleksander Wiktor
(86) Numéro de dépôt international: PCT/FR2000/003679
(87) Numéro de publication internationale: WO 2001/048392

(56) Documents cités:
- FR-A- 2 565 185
- GB-A- 192 578
- GB-A- 2 317 432
- JP-A- 5 010 355
- US-A- 4 582 332
- LESJOFORS GROUP: "the spring catalogue" , FJADER AB , STOCKHOLM XP002145932 page 21; figure 4

## Description

La présente invention se rapporte à des moyens de rappel élastique avec base d'encastrement et à un corps allongé comportant de tels moyens de rappel élastique.

Il est connu de réaliser des corps allongés tubulaires munis d'un ressort interne exerçant une force de rappel axiale. La base d'un ressort de type connu prend appui sur un épaulement interne du corps allongé tubulaire ou sur un anneau de retenue monté dans une gorge pratiquée dans la paroi radialement interne du corps allongé tubulaire.

La réalisation d'un épaulement augmente de manière considérable le prix de revient du corps tubulaire de réception du ressort, alors que la mise en oeuvre d'un anneau de retenue augmente le nombre de pièces mises en oeuvre dans l'assemblage, et, par suite, complique le procédé de fabrication. De plus, l'épaulement ou l'anneau de retenue modifie le comportement hydrodynamique du corps tubulaire, ce qui peut se révéler gênant.

Du document JP 05 010355, est connu un ressort hélicoïdal muni d'une base en forme de U destinée à être montée dans un logement diamétral.

Un but de la présente invention est d'offrir des moyens de rappel élastique, notamment un ressort susceptible de prendre appui sur au moins une paroi d'un canal axial ou sensiblement axial pratiqué dans une pièce allongée, de manière à pouvoir exercer une force de rappel axiale ou sensiblement axiale dans ledit canal.

C'est aussi un but de la présente invention d'offrir des moyens de rappel élastique d'une réalisation simple.

C'est également un but de la présente invention d'offrir de tels moyens de rappel élastique fiables et durables.

C'est aussi un but de la présente invention d'offrir un corps allongé pourvu d'un canal axial ou sensiblement axial muni des moyens de rappel élastique axial ou sensiblement axial.

C'est également un but de la présente invention d'offrir un tel corps allongé muni des moyens de rappel élastique fiables, d'un coût de revient modéré et minimisant les perturbations hydrodynamiques.

C'est aussi un but de la présente invention d'offrir un maître cylindre de frein, notamment un maître cylindre tandem de freins fiable, de construction simple et d'un prix de revient modéré.

L'invention a principalement pour objet des moyens de rappel élastique comportant un ressort spiral à spires muni à une première extrémité d'une base de fixation, la base est élastique radialement de manière à être capable de s'engager par élasticité dans une cavité de réception ménagée dans au moins une paroi d'une pièce allongée, la base étant de forme polygonale, voir JP-A-05-10355. L'invention est caractérisée par le fait que la base s'enroule en sens inverse de la spirale formée par les spires.

L'invention a également pour objet des moyens de rappel élastique caractérisés en ce que ledit ressort travaille en compression.

L'invention a également pour objet des moyens de rappel élastique caractérisés en ce que l'élément de rappel repose sur la base en trois points de contact.

L'invention a également principalement pour objet un corps allongé comportant un canal muni d'un ressort de rappel, ledit ressort étant un ressort spiral à spires muni à une première extrémité d'une base élastique radialement capable de s'engager dans une cavité de réception ménagée dans la paroi interne du canal du corps allongé, ladite base étant de forme polygonale, voir JP-A-05-10355. L'invention est caractérisée par le fait que la base s'enroule en sens inverse de la spirale formée par les spires.

L'invention a également pour objet un corps allongé caractérisé en ce que ledit corps allongé est tubulaire.

L'invention a également pour objet un corps allongé caractérisé en ce que le canal est rectiligne et en ce que les moyens de rappel élastique sont disposés axialement dans ledit canal.

L'invention a également pour objet un corps allongé caractérisé en ce que ledit corps est un maître cylindre tandem et en ce que les moyens de rappel élastique assurent le rappel axial d'un clapet.

L'invention sera mieux comprise au moyen de la description ci-après et des figures annexées données comme des exemples non limitatifs et sur lesquelles :
la figure 1 est une vue de côté de l'exemple préféré de réalisation des moyens de rappel élastique sur la présente invention ;
la figure 2 est une vue en plan des moyens de rappel élastique de la figure 1 ;
la figure 3 est une vue en plan de la spire d'encastrement des moyens de rappel élastique de la figure 1 dans une condition contrainte radialement, avant la détente dans une gorge d'encastrement ;
la figure 4 est une vue en plan d'une deuxième variante de réalisation des moyens de rappel élastique selon la présente invention ;
la figure 5 est une vue en coupe longitudinale d'une troisième variante de réalisation des moyens de rappel élastique selon la présente invention ;
la figure 6 est une vue en coupe longitudinale d'une quatrième variante de réalisation des moyens de rappel élastique selon la présente invention ;
la figure 7 est une vue en coupe longitudinale d'un maître cylindre tandem selon la présente invention.

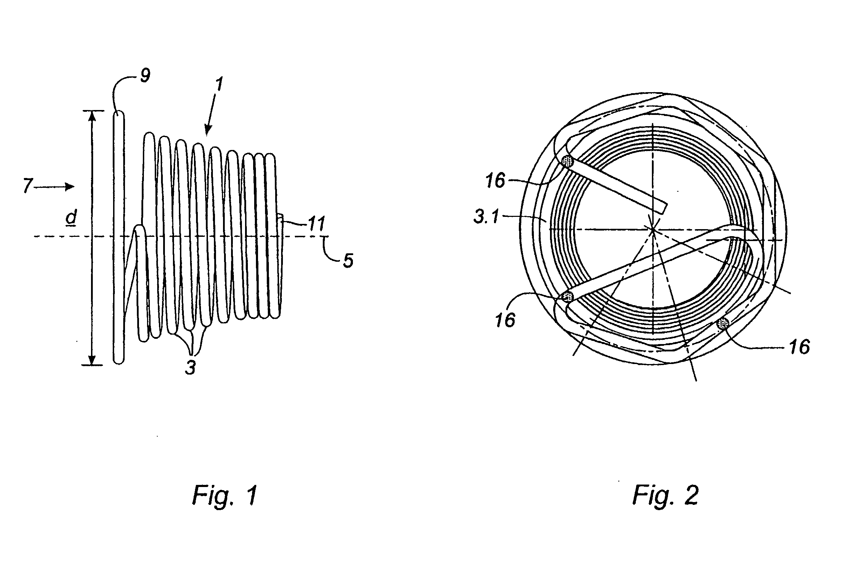

Sur les figures 1 à 7, on a utilisé les mêmes références pour désigner les mêmes éléments.

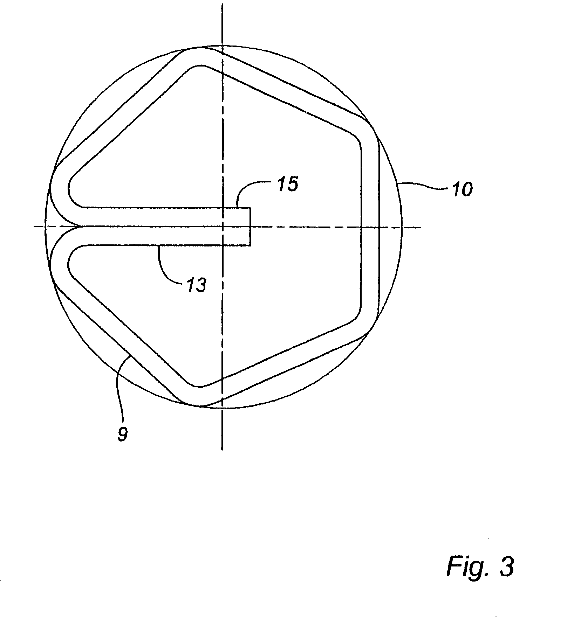

Sur les figures 1 et 3 on peut voir l'exemple préféré de réalisation des moyens de rappel élastique selon la présente invention comportant un ressort 1 spirale, à spires 3 non jointives, d'axe 5, dont une première extrémité 7 est munie d'une base 9 dont l'extension radiale d en condition non contrainte illustrée, est supérieure à la dimension interne correspondante d'un canal 10 de réception du ressort 1 d'une pièce allongée, typiquement de forme tubulaire ou sensiblement tubulaire, de préférence rectiligne ou sensiblement rectiligne. La seconde extrémité du ressort opposée à la première extrémité 7 comporte une zone d'appui 11.

Dans l'exemple illustré, le ressort 1 est un ressort travaillant en compression, étant bien entendu qu'un ressort travaillant en traction pouvant comporter des spires 3 jointives, ne sort pas du cadre de la présente invention.

Dans l'exemple non limitatif illustré, le ressort 1 comporte une zone élastique de spires 3 non jointives dont le diamètre progresse en allant de la zone d'appui 11 vers la base 9. La zone d'appui 11 comporte, par exemple, trois spires jointives ayant un même diamètre. Avantageusement la base 9 se trouve dans un plan médian perpendiculaire à l'axe 5 du ressort 1. Avantageusement, la base 9 présente une élasticité radiale permettant la mise en place et le maintien par élasticité de la base 9 dans une cavité de réception pratiquée, de préférence, sur la face interne d'une paroi délimitant au moins partiellement un canal 10 d'une pièce allongée dans lequel est disposé le ressort 1 selon la présente invention.

Avantageusement, ladite cavité est une gorge annulaire disposée dans un plan perpendiculaire à l'axe 5. Avantageusement, l'axe 5 est confondu avec l'axe du canal du corps allongé. Diverses formes de la base 9 permettent l'ancrage du ressort 1 dans le canal. On peut, par exemple utiliser un arc de cercle s'étendant sur un angle supérieur à 180° par exemple sensiblement égal à 240°. Dans la variante avantageuse illustrée, la base 9 a la forme d'une portion d'un polygone régulier, par exemple d'un heptagone. Dans l'exemple avantageusement illustré, la portion d'heptagone comporte cinq côtés et s'enroule en sens inverse de la spirale formée par les spires 3 à laquelle elle est reliée par une branche 13. L'extrémité de la base 9 opposée à celle reliée à la branche 13 est munie d'une patte 15 radialement interne. Dans la condition contrainte illustrée sur la figure 3, la branche 13 et la patte 15 sont parallèles. Au contraire, dans la condition non contrainte, illustrée sur les figures 1 et 2, la branche 13 et la patte 15 forment un angle α sensiblement égal à 60°. Une spire 3.1 immédiatement adjacente à la base 9 repose sur cette dernière en trois points de contact 16 ce qui assure une très bonne assise à l'élément de rappel selon la présente invention.

Sur la figure 4, on peut voir un exemple de ressort selon la présente invention qui diffère du ressort illustré sur les figures 1 à 3 par la forme de sa base 9, qui est sensiblement rectiligne, avantageusement passant par l'axe 5. La longueur de la base 9 est supérieure au diamètre interne du canal 10 de réception du ressort 1. La base 9 est reliée aux spires 3 par une zone 17 en épingle à cheveu. Les ressorts 1 des figures 1 à 4 est avantageusement réalisé en fil métallique, par exemple en acier, de préférence en acier à ressort. Dans l'exemple préféré de réalisation, on a utilisé un fil en acier ayant 0,45 mm de diamètre. La longueur du ressort dans une condition non contrainte est égale par exemple à 11,25 mm. Sous une charge de 1,65 N le ressort a une longueur de 7,45 mm. Sous une charge de 2,21 N, le ressort a une longueur de 6,15 mm. Sous une charge maximale, lorsque les spires 3 deviennent jointives, le ressort 1 a une longueur de 5.5 mm.

Toutefois, la mise en oeuvre de ressorts non métalliques, notamment en matériau plastique ou en matériau composite ne sort pas du cadre de la présente invention.

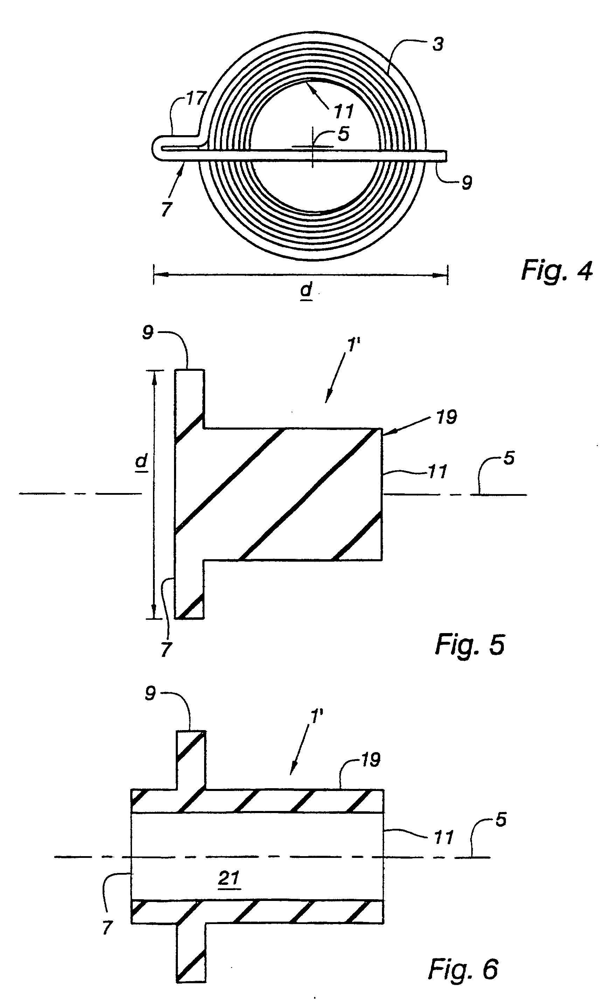

La présente invention n'est pas limitée à la mise en oeuvre de ressorts comme éléments élastiques de rappel, mais s'étend à la mise en oeuvre d'autres moyens élastiques de rappel 1' tels que, par exemple, des pièces massives ou tubulaires en élastomère, notamment en caoutchouc. Sur la figure 5, on peut voir un exemple d'un élément élastique de rappel selon la présente invention en élastomère comportant un corps 19 par exemple cylindrique, conique ou autre portant par exemple, à l'une de ses extrémités, une base 9, par exemple annulaire, à section rectangulaire ou arrondie. L'extension radiale d de la base 9 est supérieure à la dimension correspondante du canal 10 de réception du corps allongé destiné à recevoir les moyens de rappel élastique 1'. La base 10 peut être munie d'armatures telles que, par exemple, un anneau ouvert en matériau élastique, notamment en acier.

Dans l'exemple illustré sur la figure 6 le corps 19 des moyens élastiques de rappel 1' comporte un canal central 21 permettant le passage d'un fluide. De plus, la base 9 n'est pas située à une extrémité du corps 19.

Le corps allongé de réception des moyens élastiques de rappel 1 ou 1' est avantageusement de forme tubulaire tel qu'un manchon ou analogue. Les moyens élastiques de rappel 1 ou 1' selon la présente invention sont particulièrement bien adaptés à assurer le rappel de clapet d'un maître cylindre d'un circuit hydraulique de freinage d'un véhicule automobile.

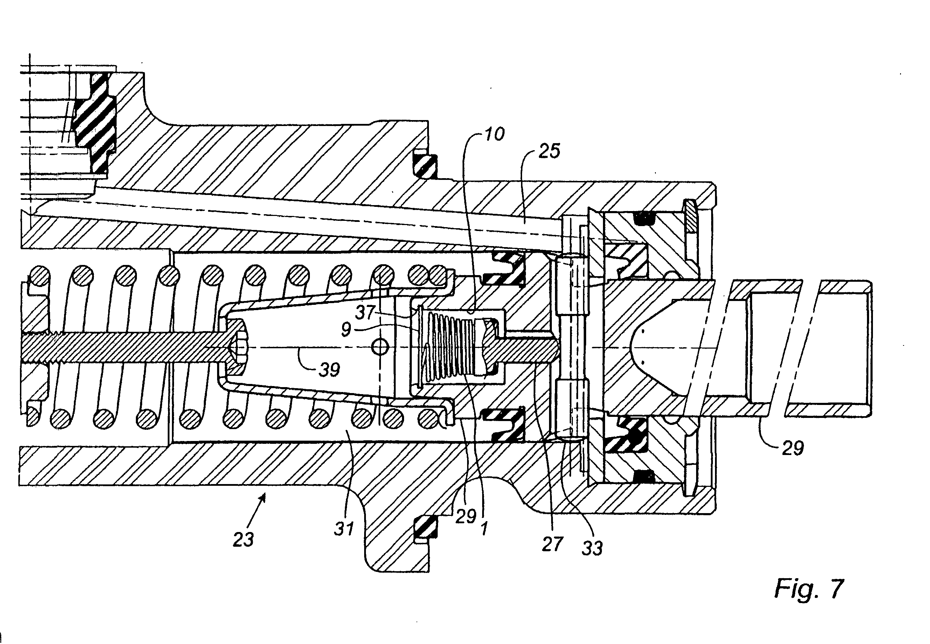

Sur la figure 7, on peut voir un détail d'un maître cylindre double 23, appelé maître cylindre tandem, selon la présente invention comportant l'exemple préféré de réalisation d'un ressort 1 selon la présente invention (tel qu'illustré sur les figures 1 à 3).

Le maître cylindre 23 comporte un canal 25 de réalimentation destiné à être connecté à un réservoir (non illustré), non pressurisé de liquide de frein. Un clapet 27 passant axialement par un piston primaire 29 relie une chambre primaire 31 au canal de réalimentation 25. Le clapet 27 comporte une tige prenant appui sur une goupille 33 sous l'action d'un ressort 1 selon la présente invention, de préférence tel qu'illustré sur les figures 1 à 3, disposé dans un alésage 10 du piston primaire 29. La base 9 du ressort 1 s'applique dans une gorge circulaire 37 ayant un profil en U ménagé sur la surface de l'alésage 10 dans un plan perpendiculaire à un axe 39 du maître cylindre 23.

Il est bien entendu que la mise en oeuvre du ressort 1, sur la présente invention au niveau du clapet du piston secondaire (non représenté) du maître cylindre tandem 23, ou au niveau du piston unique d'un maître cylindre simple, ne sort pas du cadre de la présente invention.

La présente invention s'applique notamment à l'industrie mécanique et hydraulique.

La présente invention s'applique principalement à l'industrie automobile et plus particulièrement aux dispositifs de freinage.

## Revendications

1. Moyens de rappel élastique comportant un ressort spiral à spires (3) muni à une première extrémité d'une base de fixation, la base (9) est élastique radialement de manière à être capable de s'engager par élasticité dans une cavité de réception ménagée dans au moins une paroi (10) d'une pièce allongée (29), la base (9) étant de forme polygonale, **caractérisés en ce que** la base (9) s'enroule en sens inverse de la spirale formée par les spires (3).

2. Moyens de rappel élastique selon la revendication 1 **caractérisés en ce que** ledit ressort travaille en compression.

3. Moyens de rappel élastique selon la revendication 1 ou 2 **caractérisés en ce que** l'élément de rappel repose sur la base (9) en trois points (16) de contact.

4. Corps allongé comportant un canal (10) muni d'un ressort de rappel, ledit ressort étant un ressort spiral à spires (3) muni à une première extrémité d'une base (9) élastique radialement capable de s'engager dans une cavité de réception ménagée dans la paroi interne du canal (10) du corps allongé (29) ladite base (9) étant de forme polygonale, **caractérisé en ce que** la base (9) s'enroule en sens inverse de la spirale formée par les spires (3).

5. Corps allongé selon la revendication 4 **caractérisé en ce que** ledit corps allongé est tubulaire.

6. Corps allongé selon la revendication 4 **caractérisé en ce que** le canal (10) est rectiligne et **en ce que** les moyens de rappel élastique (1) sont disposés axialement dans ledit canal (10).

7. Corps allongé selon la revendication 4, 5 ou 6 **caractérisé en ce que** ledit corps est un maître cylindre tandem et **en ce que** les moyens de rappel élastique assurent le rappel axial d'un clapet (27).

## Patentansprüche

1. Elastisches Rückstellmittel, das eine Spiralfeder mit Windungen (3) aufweist, welche an einem ersten Ende mit einer Befestigungsbasis versehen ist, wobei die Basis (9) radial elastisch ist, so dass sie sich durch Elastizität in einen Aufnahmehohlraum einfügen kann, der in mindestens einer Wand (10) eines länglichen Stücks (29) ausgebildet ist, wobei die Basis (9) eine polygonale Form aufweist, **dadurch gekennzeichnet, dass** die Basis (9) sich entgegengesetzt zu der von den Windungen (3) gebildeten Spirale einrollt.

2. Elastisches Rückstellmittel nach Anspruch 1, **dadurch gekennzeichnet, dass** die Feder mit Druck arbeitet.

3. Elastisches Rückstellmittel nach Anspruch 1 oder 2, **dadurch gekennzeichnet, dass** das Rückstellelement in drei Kontaktpunkten (16) auf der Basis (9) ruht.

4. Länglicher Körper, der einen Kanal (10) aufweist, welcher mit einer Rückstellfeder versehen ist, wobei die Feder eine Spiralfeder mit Windungen (3) ist, die an einem ersten Ende mit einer Basis (9) versehen ist, welche radial elastisch ist und sich in einen Aufnahmehohlraum einfügen kann, welcher in der inneren Wand des Kanals (10) des länglichen Körpers (29) ausgebildet ist, wobei die Basis (9) eine polygonale Form aufweist, **dadurch gekennzeichnet, dass** sich die Basis (9) entgegengesetzt zu der von den Windungen (3) gebildeten Spirale einrollt.

5. Länglicher Körper nach Anspruch 4, **dadurch gekennzeichnet, dass** der längliche Körper röhrenförmig ist.

6. Länglicher Körper nach Anspruch 4, **dadurch gekennzeichnet, dass** der Kanal (10) geradlinig ist und dass das elastische Rückstellmittel (1) axial in dem Kanal (10) angeordnet ist.

7. Länglicher Körper nach Anspruch 4, 5 oder 6, **dadurch gekennzeichnet, dass** der Körper ein Tandem-Hauptzylinder ist und dass das elastische Rückstellmittel das axiale Rückstellen eines Ventilelements (27) gewährleistet.

## Claims

1. Resilient return means comprising a spiral spring with turns (3) equipped at a first end with an attachment seat, the seat (9) is radially compliant so as to be capable of elastically engaging with a receiving cavity made in at least one wall (10) of an elongate part (29), the seat (9) having a polygonal shape, **characterized in that** the seat (9) is wound in the opposite direction to the spiral formed by the turns (3).

2. Resilient return means according to Claim 1, **characterized in that** said spring works in compression.

3. Resilient return means according to Claim 1 or 2, **characterized in that** the return element bears on the seat (9) at three points (16) of contact.

4. Elongate body comprising a passage (10) fitted with a return spring, said spring being a spiral spring with turns (3) equipped at a first end with a radially compliant seat (9) capable of engaging with a receiving cavity made in the inner wall of the passage (10) of the elongate body (29), said seat (9) having a polygonal shape, **characterized in that** the seat (9) is wound in the opposite direction to the spiral formed by the turns (3).

5. Elongate body according to Claim 4, **characterized in that** said elongate body is tubular.

6. Elongate body according to Claim 4, **characterized in that** the passage (10) is rectilinear and **in that** the resilient return means (1) are arranged axially in said passage (10).

7. Elongate body according to Claim 4, 5 or 6, **characterized in that** said body is a tandem master cylinder and **in that** the resilient return means ensure the axial return of a valve (27).
